Europäisches Patentamt

European Patent Office

Office européen des brevets

(11) Veröffentlichungsnummer: **0 301 131 B1**

# EUROPÄISCHE PATENTSCHRIFT

(45) Veröffentlichungstag der Patentschrift: **27.03.91**

(51) Int. Cl.⁵: **B60S 1/34**

(21) Anmeldenummer: **87117446.2**

(22) Anmeldetag: **26.11.87**

(54) **Wischarm, insbesondere für Kraftfahrzeug-Scheibenwischeranlagen.**

(30) Priorität: **25.07.87 DE 3724777**

(43) Veröffentlichungstag der Anmeldung:
**01.02.89 Patentblatt 89/05**

(45) Bekanntmachung des Hinweises auf die
Patenterteilung:
**27.03.91 Patentblatt 91/13**

(84) Benannte Vertragsstaaten:
**ES FR GB IT**

(56) Entgegenhaltungen:
**EP-A- 0 060 781
DE-A- 2 511 013
DE-A- 3 521 527
DE-C- 3 530 108
FR-A- 2 050 604**

(73) Patentinhaber: **SWF Auto-Electric GmbH
Stuttgarter Strasse 119 Postfach 135
W-7120 Bietigheim-Bissingen(DE)**

(72) Erfinder: **Bauer, Kurt
Wolfsgrubenstrasse 21
W-7121 Ingersheim 2(DE)**
Erfinder: **Prohaska, Hans
Nelkenweg 44
W-7120 Bietigheim-Bissingen(DE)**
Erfinder: **Schmid, Eckhardt
Heilbronner Strasse 62
W-7129 Brackenheim(DE)**

## Beschreibung

Die Erfindung betrifft einen Wischarm gemäß den Merkmalen des Oberbegriffs des Anspruchs 1. Ein derartiger Wischarm ist aus der FR-A-2 050 604 bekannt.

Heutzutage werden Kraftfahrzeuge manchmal so konstruiert, daß ein Windschutzscheibenwischer in einem zwischen der Windschutzscheibe und der Motorhaube oder dem Kofferraumdeckel befindlichen schmalen Schlitz auf der Wischerwelle befestigt werden muß, weil der Scheibenwischer in der Parkstellung nicht sichtbar sein und eine sogenannte versenkte Parkstellung einnehmen soll.

Damit man das Wischblatt eines Scheibenwischers problemlos auswechseln kann, ist es erwünscht, daß das Gelenkteil des Wischarms, das meist über eine Wischstange ein Wischblatt hält, in eine stabile Stellung von der Scheibe abgeklappt werden kann, wo das vordere Ende des Wischarms möglichst weit von der Scheibe entfernt ist. Die stabile Abklappstellung kann man dadurch erhalten, daß man das Gelenkteil gegenüber dem Befestigungsteil mitsamt dem Federelement und gegebenenfalls dem Bügel um die Schwenkachse zwischen Befestigungsteil und Gelenkteil, die durch einen üblicherweise als Nietbolzen ausgebildeten Lagerbolzen realisiert ist, welcher in einer rohrförmigen Aufnahme geführt ist, die von einer Lagerbuchse gebildet wird, die von Befestigungsteilmaterial umgeben ist, das üblicherweise ein Gußmaterial ist, so weit verschwenkt, daß die bekanntermaßen zwischen den beiden Anlenkpunkten des Federelements verlaufende Wirkungslinie des Federelements die Schwenkachse zwischen dem Gelenkteil und dem Befestigungsteil überquert, bis das Federelement seine Totpunktlinie gegenüber der Schwenkachse, welche bekanntermaßen die durch den Mittelpunkt der Schwenkachse gehende Linie schneidet, überschritten hat und das Federelement oder der Bügel an dem die Schwenkachse führenden Bereich des Befestigungsteils anschlägt oder bis das Gelenkteil an der Oberseite des Befestigungsteils anschlägt. Ein solcher Wischarm ist beispielsweise aus der DE-A- 21 05 101 bekannt. Hier ist eine Zugfeder einerseits an einem vor der Schwenkachse zwischen Befestigungsteil und Gelenkteil liegenden Bereich an einer mit dem Gelenkteil vernieteten Wischstange und andererseits an einem weiter hinten, aber noch vor der Schwenkachse liegenden Bereich an einem etwa C-förmigen, nach unten gekrümmten Bügel eingehängt, welcher an einem am Befestigungsteil angeordneten Haltezapfen angelenkt ist. Dieser Anlenkpunkt ist derart hinter und unter der Schwenkachse zwischen Befestigungsteil und Gelenkteil angeordnet, daß in der Betriebsstellung des Gelenkteils die Wirkungslinie des Federelements in einem Abstand unterhalb der Schwenkachse liegt und das Federelement das Gelenkteil nach unten in Richtung der zu reinigenden Scheibe zieht. Die Anlenkpunkte des Federelements am Bügel und der Anlenkpunkt des Bügels am Befestigungsteil liegen dabei auf einer geraden Linie unterhalb der Schwenkachse. Das Gelenkteil kann durch Schwenken um die Schwenkachse nach oben in eine stabile Abklappstellung gebracht werden, in der das Gelenkteil mit einem abgebogenen Fortsatz an der Oberseite des Befestigungsteils anliegt. Der Abklappwinkel beträgt hier etwa 45 Grad. Die Anlenkpunkte des Federelements und der Anlenkpunkt des Bügels am Befestigungsteil liegen dabei auf einer geraden Linie jenseits des Totpunkts des Federelements gegenüber der Schwenkachse. Diese stabile Abklappstellung kann hier nur erreicht werden, weil der Bügel derart gekrümmt ist, daß er nicht an der rohrförmigen Aufnahme anschlägt, bevor die Wirkungslinie des Federelements den Totpunkt gegenüber der Schwenkachse überschritten hat. Bei einem vorzeitigen Anschlagen des Bügels würde das Gelenkteil wieder in Richtung der Scheibe zurückschlagen, wenn man das Gelenkteil z.B. beim Wischblattwechsel losläßt, wodurch die Scheibe beschädigt werden kann. Wegen der relativ großen Krümmung des Bügels ist aber die Bauhöhe des Wischarms so groß, daß er nicht in allen Fällen für Scheibenwischeranlagen mit versenkter Parkstellung Anwendung finden kann. Theoretisch könnte man einen weniger stark gekrümmten Bügel verwenden und dadurch die Bauhöhe des Wischarms verkleinern, indem man den Anlenkpunkt des Bügels am Befestigungsteil weiter nach vorne verlagert. Dann ist aber ein sehr großer Abklappwinkel nötig, wenn das Gelenkteil eine stabile Abklappstellung erreichen soll. Außerdem muß dann der vor der Schwenkachse liegende Bereich des Wischarms sehr lang gestaltet werden, wenn ein gleich lang wie bisher gestalteter Bügel und das bisher verwendete Federelement verwendet werden sollen.

Aus der FR-A- 20 50 604 ist ein Wischarm bekannt, bei dem das in Form einer Schraubenfeder gestaltete Federelement zwischen Gelenkteil und Befestigungsteil einen geraden Endabschnitt besitzt, der mit einem Haken an einem Stift des Befestigungsteils eingehängt ist. Das Gelenkteil des Wischarms ist am Befestigungsteil über eine Schwenkachse drehbar gelagert, die annähernd auf ihrer gesamten Länge von einer Lagerbuchse umgeben ist, die in das Befestigungsteil eingedrückt ist. Die Lagerbuchse ist mittig mit einer Abflachung versehen, in die der Endabschnitt des Federelements eintauchen kann, so daß beim Abklappen des Gelenkteils trotz des geraden Endabschnitts des Federelements die Totpunktlinie des Federelements knapp überschritten wird. Wegen der nur knappen überschreitung der Totpunktlinie ist die Abklappstellung aber nur wenig stabil.

Der Erfindung liegt die Aufgabe zugrunde, einen Wischarm mit den Merkmalen aus dem Oberbegriff des Anspruchs 1 so weiterzubilden, daß bei niedriger Bauweise und preiswerter Herstellmöglichkeit eine stabile Abklappstellung erhalten werden kann.

Diese Aufgabe wird bei einem Wischarm mit den Merkmalen aus dem Oberbegriff des Anspruchs 1 dadurch gelöst, daß die Lagerbuchse eine maßlich auf das Federelement bzw. den Bügel abgestimmte Aussparung aufweist, so daß das Federelement bzw. der Bügel beim Abklappen des Gelenkteils bis zur Mantelfläche der Schwenkachse gelangen kann.

Beim Abklappen des Gelenkteils kann somit die Totpunktlinie des Federelements gegenüber der Schwenkachse in der Abklappstellung auch mit einem gar nicht oder weniger stark als üblich gekrümmten Federelement bzw. Bügel problemlos überschritten werden, so daß die Abklappstellung weit auf die sichere Seite verlagert werden kann. Demgemäß ist durch die erfindungsgemäße Ausbildung des Wischarms im Schwenkachsenbereich eine niedrige Bauweise des Wischarms mit der zuvor beschriebenen stabilen Abklappstellungsart gewährleistet.

Trotz der Aussparung bleibt die bekannte vorteilhafte Führung der sich über die gesamte Wischarmbreite erstreckenden Schwenkachse über deren gesamte

Schaftlänge, d. h. bei einem Nietbolzen vom Setzkopf bis zum Schließkopf weitgehend erhalten.

Vorteilhafte konstruktive Ausgestaltungen der Aussparung sind in den Ansprüchen 2 bis 4 aufgezeigt.

Bevorzugt wird die Lagerbuchse mittels eines Rollverfahrens aus einem Blechstück hergestellt werden. Für die Kosten des Rollverfahrens spielt eine spezielle Gestalt des zu rollenden Blechstücks keine Rolle. In den Ansprüchen 5 und 6 ist aufgezeigt, wie das zur Lagerbuchsenherstellung vorgesehene Blechstück gestaltet werden kann. Die aus Anspruch 6 ersichtliche Ausgestaltung ist besonders vorteilhaft, weil dann die Rollnaht im gleichen Bereich liegt, wie eine gedachte, den tatsächlichen Winkelbereich der Aussparung teilende Linie, so daß die Mitte der Lagerbuchse aufgrund der Lage der Naht problemlos erkennbar und dadurch die Aussparung problemlos lagerichtig in bezug auf den Schwenkbereich des Federelements bzw. des Bügels ausgerichtet am Wischarm montiert werden kann. Anderenfalls, z. B. wenn die Aussparung nicht durch eine Naht geteilt bzw. begrenzt wird, oder zusätzlich wird in Anspruch 7 vorgeschlagen, ein weiteres Mittel zur Lageorientierung bzw. -sicherung der Lagerbuchse vorzusehen. Dies kann beispielsweise eine Fixiernut sein. Diese kann bei einer gerollten Lagerbuchse gemäß Anspruch 8 durch Entfernen von Ecken am zu rollenden Blechstück hergestellt werden.

In Anspruch 9 ist aufgezeigt, wie das Befestigungsteil des Wischarms im Schwenkachsenbereich vorteilhaft zur Halterung der Schwenkachse ausgestaltet werden kann. Die vorgeschlagene Deckwand trägt zur sicheren Führung der gegebenenfalls in einer Lagerbuchse geführten Schwenkachse bei. Der Einschnitt in der Deckwand stellt sicher, daß das Federelement bzw. der

Bügel nicht am Befestigungsteil anschlagen und durch dieses ungewollt in die Betriebsstellung gedrückt werden können.

Wenn, wie in Anspruch 10 vorgeschlagen, zwei nebeneinander angeordnete Federelemente verwendet werden, kann die Bauhöhe des Wischarms weiter erniedrigt werden. Der in Anspruch 12 zu deren Führung vorgeschlagene Bügel führt die Federelemente dabei sicher und platzsparend mittig der Längserstreckung der Befestigungsteils.

Weitere vorteilhafte Einzelheiten und Ausgestaltungen der Erfindung sind aus den übrigen Unteransprüchen sowie der nachfolgend erläuterten Zeichnung ersichtlich, die ein Ausführungsbeispiel zeigt. Dabei ist dargestellt in

Fig. 1     ein Längsschnitt durch einen Abschnitt eines erfindungsgemäßen Wischarms, in

Fig. 2     der Wischerabschnitt in Ansicht von oben, in

Fig. 3     ein Teilbereich aus Fig. 1 in vergrößerter Darstellung und mit dem Wischarm -Gelenkteil in Abklappstellung, in

Fig.4     ein Schnitt entlang der Linie IV - IV in Fig. 3, in

Fig. 5     eine erfindungsgemäße Lagerbuchse in perspektivischer Ansicht und, in vergrößerter Darstellung und in

Fig. 6     das zur Herstellung der Lagerbuchse vorgesehene Blechstück in Ansicht von oben.

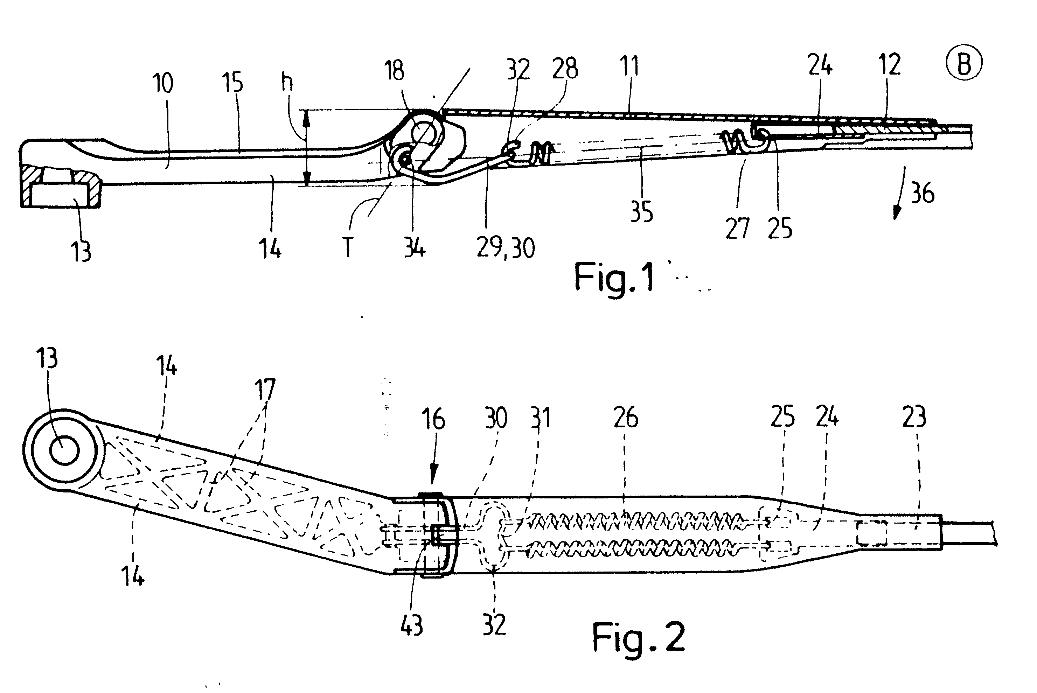

Der in den Fig. 1 bis 4 gezeigte Wischarm besitzt ein Befestigungsteil 10, ein Gelenkteil 11 und eine Wischstange 12. Über das Befestigungsteil 10 kann der Wischarm über eine an seinem hinteren Ende vorgesehene Bohrung 13 auf bekannte Weise drehfest mit einer nicht dargestellten Wischerwelle verbunden werden. Die Wischstange 12 ist mit dem Gelenkteil 11 verbunden und trägt an ihrem nicht dargestellten vorderen Ende ein Wischblatt.

Das Befestigungsteil 10 ist aus einer Zinklegierung hergestellt und besitzt vor der Bohrung 13 zwei sich im wesentlichen in Wischarmlängsrichtung in seitlichem Abstand zueinander erstreckende, lange Seitenwände 14, welche an ihren oberen Enden durch eine Deckwand 15 miteinander verbunden sind. Außer im Bereich des vorderen Endes 16 des Befestigungsteils 10 sind die Wände 14 und 15 noch durch Querstreben 17 miteinander verbunden. Das vordere Ende 16 des Befestigungsteils 10 verläuft in einem Winkel zu den übrigen Bereichen des Befestigungsteils 10 und in einer Linie mit dem Gelenkteil 11 in Wischarmlängsrichtung. Die beschriebene Gestalt des Befestigungsteils 10 wurde gewählt, weil die Wischerwelle relativ weit unterhalb der zu wischenden Scheibe verläuft und der aus Wischblatt und Wischarm zusammengesetzte Wischhebel somit zumindest über einen Teil seiner Längserstreckung in einer sogenannten versenkten Parkstellung in einem z. B. von dem Spritzblech und der Motorhaube eines Kraftfahrzeugs begrenzten Schlitz verlaufen kann.

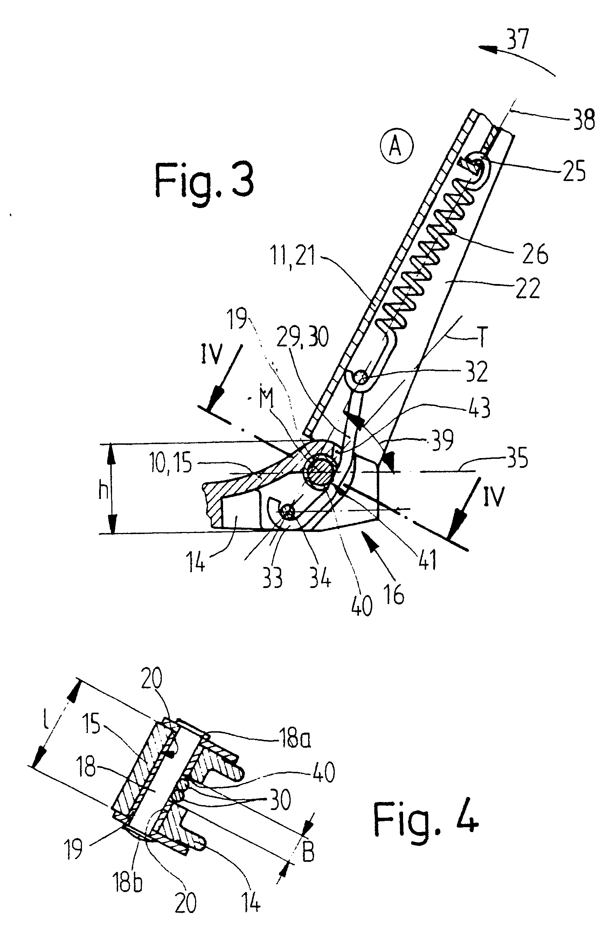

Nahe des vorderen Endes 16 des Befestigungsteils 10 ist das Gelenkteil 11 und damit die mit ihm verbundenen Teile Wischstange 12 und Wischblatt um eine sich quer zur Wischarmlängsrichtung erstreckende Schwenkachse 18, welche durch eine Nietbolzen realisiert ist, schwenkbar am Befestigungsteil 10 gelagert. Die Schwenkachse 18 ist von einer zylindrischen Lagerbuchse 19 umgeben, welche in miteinander fluchtenden Bohrungen 20 in den Seitenwänden 14 des Befestigungsteils 10 eingepreßt ist (vgl. Fig.4). Die Lagerbuchse 19 erstreckt sich dabei fast über die gesamte Schaftlänge 1 des Bolzens 18, d. h. zwischen dessen Köpfen 18a und 18b. Das Gelenkteil 11 ist aus einem Stahlblech gefertigt und im Querschnitt etwa U-förmig gestaltet. Es weist einen Steg 21 an der Oberseite und zwei Seitenwangen 22 auf, welche sich ein Stück entlang der Außenseiten des Befestigungsteils 10 erstrecken und die Schwenkachse 18 umgreifen. Mit seinem vorderen Ende umgreift das Gelenkteil 11 das hintere Ende 23 der Wischstange 12.

Das hintere Ende 23 der Wischstange 12 ist gerade ausgeführt und wird von einem Klemmteil 24 umgriffen, das an seinem sich verbreiternden hinteren Ende mit zwei seitlich nebeneinander angeordneten Durchbrüchen 25 versehen ist. In diese Durchbrüche 25 sind zwei in geringem Abstand seitlich nebeneinander im Gelenkteilinneren verlaufende, als Zugfedern 26 ausgebildete Federelemente mit ihren vorderen, hakenförmig nach oben gebogenen Enden 27 eingehängt und somit am Gelenkteil 11 angelenkt. Mit ihren hinteren Enden 28 sind die Zugfedern 26 an einen Bügel 29 angehängt. Der Bügel 29 ist aus einem im Querschnitt runden Stahldraht etwa U-förmig gebogen und besitzt zwei U-Schenkel 30, welche durch die U-Krümmung 31 miteinander verbunden sind. Die U-Krümmung 31 ist mittig ein Stück einwärts gebogen, so daß ihre Seitenbereiche 32 etwas in Längsrichtung vorstehen. An diese Seitenbereiche 32 sind die Zugfedern 26 angehängt, so daß sie immer den gewünschten seitlichen Abstand voneinander besitzen. Die beiden U-Schenkel 30 des Bügels 29 verlaufen über den größten Teil ihrer Längenausdehnung leicht nach unten gekrümmt, und, wie die Fig. 4 zeigt, dicht nebeneinander. Mit ihren hakenförmig nach oben gekrümmten freien Enden 33 umgreifen die U-Schenkel 30 des Bügels 29 einen Stift 34, welcher sich zwischen den Seitenwänden 14 des Befestigungsteils 10 hinter und unterhalb der Schwenkachse 18 erstreckt und dort in Öffnungen eingepreßt ist.

Die zwischen dem Anlenkpunkt 25 jeder Zugfeder 26 am Gelenkteil 11 und dem Anlenkpunkt 32 jeder Zugfeder 26 am Bügel 29 und dem Anlenkpunkt 34 jedes Bügelschenkels 30 am Befestigungsteil 10 gedachte, mit der Federwirkungslinie identische Verbindungslinie 35 liegt in der Betriebsstellung B auf Abstand unterhalb der Schwenkachse 18 diesseits der Totpunktlinie T der Federelemente 26 gegenüber der Schwenkachse 18. Dadurch wird das Gelenkteil 11 und das mit ihm verbundene Wischblatt in der Betriebsstellung B in einer Schwenkrichtung, welche in Fig. 1 durch den Pfeil 36 angedeutet ist, nach unten gegen die nicht dargestellte, zu reinigende Scheibe vorgespannt.

Zum Wischblattwechsel oder wenn es sonst gewünscht wird, kann das Gelenkteil 11 mitsamt der Wischstange 12 und dem Wischblatt von der Betriebsstellung B durch Schwenken des Gelenkteils 11 in eine nach oben, durch den Pfeil 37 angedeutete Richtung um die Schwenkachse 18 in eine stabile Abklappstellung A gebracht werden, wo also das Gelenkteil 11 nicht durch die Wirkung der Zugfedern 26 ungewollt in die Betriebsstellung B zurückgezogen werden kann und die Wischstange 12 auf die Scheibe aufschlagen und diese beschädigen kann. In der stabilen Abklappstellung A befinden sich, wie die Fig. 3 zeigt, die Anlenkpunkte 25, 32 und 34 der Federelemente 26 und damit deren Wirkungslinien 38 jenseits der Totpunktlinie T der Federelemente 26 gegenüber der Schwenkachse 18. Dabei schließen die Wirkungslinien 38 der Federelemente 26 in der Abklappstellung A mit den Wirkungslinien 35 der Federelemente 26 in der Betriebsstellung B einen sich zum vorderen Wischarmende (Wischstange 12 etc.) hin öffnenden Winkel 39 von etwa 60 Grad ein. Der sogenannte Abklappwinkel des Wischarms beträgt somit etwa 60 Grad. Er liegt somit so weit jenseits der Totpunktlinien T der Federelemente 26 gegenüber der Schwenkachse 18, daß mit größter Sicherheit kein unerwünschtes Zurückklappen des Gelenkteils 11 möglich ist.

Trotzdem besitzt der Wischarm an seinem höchsten, im Bereich der Schwenkachse 18 liegenden Abschnitt lediglich eine Bauhöhe h von etwa 22 mm. Er ist deswegen hervorragend zur Verwendung in Kraftfahrzeug-Scheibenwischeranlagen mit versenkter Parkstellung in einem schmalen Schlitz geeignet. Die niedrige Bauhöhe h trotz großen Abklappwinkels 39 bei stabiler Abklappstellung A ist dadurch möglich, weil die Lagerbuchse 19 eine maßlich auf den Bügel 29 abgestimmte Aussparung 40 aufweist, welche in der Abklappstellung A ein Eintauchen des Bügels 29 in die Lagerbuchse 19 ermöglicht, und zwar bis zur Mantelfläche 41 der Schwenkachse 18, d. h. des Nietbolzens. Die Aussparung 40 erstreckt sich, wie insbesondere die Fig. 3 zeigt, über einen Winkelbereich von etwa 90 Grad. Sie ist mittig der Längs- bzw. Axialerstrekkung der Schwenkachse 18 und der Lagerbuchse 19 vorgesehen und reicht in diese Erstreckungsrichtung geringfügig weiter als der Bügel 29, und zwar, wie die Fig. 4 zeigt, wie dessen beide Schenkel 30. Sie besitzt demgemäß eine Breite B, welche geringfügig größer als das aus den beiden Durchmessern der Bügelschenkel 30 und deren seitlichem Abstand gebildete Maß ist.

Wie die Fig. 2 und 3 zeigen, erstreckt sich die die Seitenwände 14 des Befestigungsteils 10 am oberen Ende verbindende Deckwand 15 im Schwenkbereich des Bügels 29 nicht über einen so großen Winkelbereich wie in den seitlichen Bereichen um die Lagerbuchse 19. Die Deckwand 15 besitzt dazu einen in Bügelschwenkrichtung 37 mit der Aussparung 40 in der Lagerbuchse 19 fluchtend verlaufenden Einschnitt 43, der auf Abstand zu Aussparung 40 und damit zum Bügel 29 in der Abklappstellung A endet. Auch diese Maßnahme trägt dazu bei, daß die beschriebene Abklappstellung A erreicht wird.

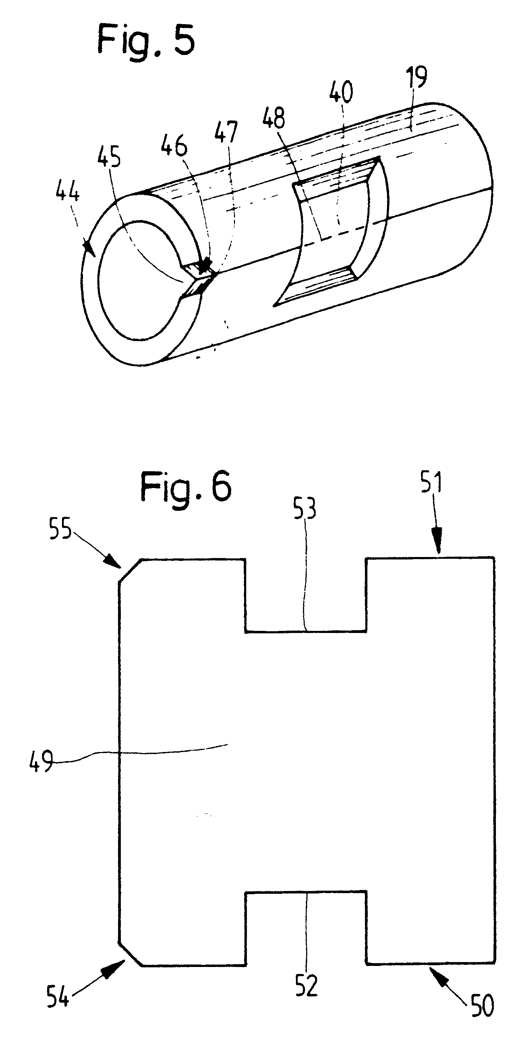

Wie die Fig. 5 zeigt, ist die Aussparung 40 dabei rechteckig gestaltet. Sie könnte aber prinzipiell auch oval, oder bei einem größeren Abstandsmaß oder einem größeren Durchmesser bzw. Dikkenmaß der Bügelschenkel 30 auch rund gestaltet sein. Wie die Fig. 5 weiter zeigt, besitzt die Lagerbuchse 19 eine sich von einer ihrer Grundflächen, nämlich der Grundfläche 44, aus ein kleines Stück entlang der Längserstreckung der Lagerbuchse 19 erstreckende Fixiernut 45. Die Fixiernut 45 besitzt hier einen gewinkelten Nutgrund 46, dessen spitze Kante 47 zur Aussparung 40 zeigt und mit deren gedachter Längsmittellinie 48 auf der gleichen Linie liegt. Die Fixiernut 45 ermöglicht somit eine ganz exakte Ausrichtung der Lagerbuchse 19 bezüglich des Bügels 29 bei der Buchsenmontage, so daß die gewünschte Anlage des Bügels 29 an der Schwenkachse 18 gewährleistet ist.

Dabei ist die Lagerbuchse 19 durch Rollen aus einem im wesentlichen rechteckigen Blechstück 49 hergestellt worden, welches in Fig. 6 gezeigt ist.

Aus dem Blechstück 49 ist im Bereich zweier einander gegenüberliegender Kanten 50 und 51 jeweils ein rechteckiger, sich von den Kanten 50 und 51 aus ins Blechstückinnere erstreckender Ausschnitt 52 bzw. 53 ausgestanzt. Nach dem Rollen bilden die Ausschnitte 52 und 53 die Aussparung 40 der Lagerbuchse 19. Die Ausschnitte 52 und 53 sind dabei, wie die Fig. 6 weiter zeigt, gleich tief. Die Rollnaht deckt sich somit mit der gedachten Längsmittellinie 48 (Fig. 5) der Aussparung 40, so daß auch diese Maßnahme bei der Ausrichtung der Lagerbuchse 19 hilft.

Die Fixiernut 45 der Lagerbuchse 19 ist dadurch geschaffen worden ,daß man aus dem Blechstück 49 zum einen von der Kante 50 und zum anderen von der Kante 51 aus an zwei einander gegenüberliegenden Ecken jeweils gleich große, dreieckige Bereiche 54 und 55 ausgestanzt hat. Die Begrenzungsflächen der dreieckigen Bereiche 54 und 55 bilden nach dem Rollen den Nutgrund 46 (Fig. 5).

Somit die relativ kompliziert gestaltete Lagerbuchse 19 auf einfache, kostengünstige Weise hergestellt worden.

## Ansprüche

1. Wischarm, insbesondere für Kraftfahrzeug-Scheibenwischeranlagen, mit einem Befestigungsteil (10) und einem im Bereich eines ersten, vorderen Endes am Befestigungsteil (10) um eine wenigstens annähernd quer zur Wischarmlängsrichtung verlaufende Schwenkachse (18) schwenkbar gelagerten Gelenkteil (11), mit wenigstens einem einerseits am Gelenkteil (11) und andererseits entweder direkt oder über einen Bügel (29,30) hinter und unterhalb der Schwenkachse (18) am Befestigungsteil (10) angelenkten Federelement (26)sowie mit einer die Schwenkachse (18)umebenden, sich wenigstens annähernd über deren gesamte Schaftlänge erstreckenden Lagerbuchse (19), wobei das Federelement (26) das Gelenkteil (11) während des Wischerbetriebes gegen die zu reinigende Scheibe vorspannt und dabei die Wirkungslinie (38) des Federelementes (26) in einem gewissen Abstand diesseits der Federtotpunktlinie (T) gegenüber der Schwenkachse zwischen Befestigungsteil und Gelenkteil verläuft, während diese wirkungslinie (38) in einer Abklappstellung (A) des Gelenkteils (11) jenseits der Federtotpunklinie (T) verläuft, dadurch gekennzeichnet, daß die Lagerbuchse (19) eine maßlich auf das Federelement bzw. .den Bügel (29) abgestimmte Aussparung (40) aufweist, die in der Abklappstelung (A) ein Eintauchen des Federelementes bzw. des Bügels (29) in die Aussparung (40) der Lagerbuchse (19) bis zur Mantelfläche (41) der Schwenkchse (18) ermöglicht.

2. Wischarm nach Anspruch 1, dadurch gekennzeichnet, daß sich die Aussparung (40) über einen Winkelbereich von etwa 90 Grad erstreckt.

3. Wischarm nach Anspruch 1 oder 2, dadurch gekennzeichnet, daß die Aussparung (40) in Axialrichtung der Schwenkachse (18) geringfügig weiter als das Federelement bzw. der Bügel (29, 30) reicht.

4. Wischarm nach einem der vorhergehenden Ansprüche, dadurch gekennzeichnet, daß die Aussparung (40) in axialer Richtung wenigstens annähernd mittig der Schwenkachse (18) vorgesehen ist.

5. Wischarm nach wenigstens einem der Ansprüche 1 bis 4, dadurch gekennzeichnet, daß die Lagerbuchse (19) durch Rollen aus einem im wesentlichen rechteckigen Blechstück (49) hergestellt ist, das einen sich von wenigstens einer Kante (50, 51) aus ins Blechstückinnere erstreckenden Ausschnitt (52, 53) aufweist, welcher nach dem Rollen die bzw. einen Teil der Aussparung (40) darstellt.

6. Wischarm nach Anspruch 5, dadurch gekennzeichnet, daß das Blechstück (49) im Bereich zweier einander gegenüberliegender Kanten (50, 5l) zwei wenigstens annähernd gleich große Ausschnitte (52, 53) aufweist.

7. Wischarm nach einem der Ansprüche 1 bis 6, dadurch gekennzeichnet, daß die Lagerbuchse (19) wenigstens ein Mittel (45, 48) zu ihrer Lageorientierung bzw. -sicherung aufweist.

8. Wischarm nach Anspruch 7, dadurch gekennzeichnet, daß an zwei einander gegenüberliegenden Eckbereichen der Kanten (50, 51) jeweils ein dreieckiger Bereich (54, 55) entfernt ist.

9. Wischarm nach einem der vorhergehenden Ansprüche, dadurch gekennzeichnet, daß das Befestigungsteil (10) wenigstens im Bereich der Schwenkachse (18) zwei sich im seitlichen Abstand in Befestigungsteil-längsrichtung erstreckende Seitenwände (14) aufweist, welche zwei miteinander fluchtende Bohrungen (20) zur Führung der Schwenkachse (18) aufweisen und wenigstens annähernd von einem oberhalb des hinteren Einhängepunktes (34) des Federelements (26) aus bis über einen gewissen Winkelbereich der Schwenkachse (18) bzw. Lagerbuchse (19), vom hinteren Wischarmende (13) aus betrachtet, durch eine Deckwand (15) miteinander verbunden sind, welche einen mit der Aussparung (40) fluchtenden Einschnitt (43) aufweist, der auf Abstand vom Federelement bzw. Bügel (29, 30) endet.

10. Wischarm nach Anspruch 4, dadurch gekennzeichnet, daß er zwei vorzugsweise in einem geringen seitlichen Abstand nebeneinander angeordnete Federelemente (26) aufweist, welche an der U-Krümmung (31, 32) eines im wesentlichen U-förmigen Bügels (29) angehängt sind, dessen beide U-Schenkel (30) über den größten Teil ihrer Längenausdehnung dicht nebeneinander verlaufen und mit ihren freien Enden (33) am Befestigungsteil (10) angelenkt sind.

11. Wischarm nach Anspruch 10, dadurch gekennzeichnet, daß die freien Enden (33) einen sich zwischen den Seitenwänden (14) des Befestigungsteils (10) erstreckenden Stift (34) umgreifen.

12. Wischarm nach einem der vorhergehenden Ansprüche, dadurch gekennzeichnet, daß die Wirkungslinie (38) des Federelements (26) in der Abklappstellung (A) mit der Wirkungslinie (35) des Federelements (26) in der Betriebsstellung (B) einen sich zum vorderen Wischarmende (12) hin öffnenden Winkel (39) von etwa 60 Grad einschließt.

**Claims**

1. A wiper arm, especialy for motor vehicle windshield wiper systems, comprising a fastening member (10) and a link (11) mounted to be swivelled about a aswiveliing axis (18) extending at least substantially transversely to the longitudinal direction of the wiper arm, comprising at least one spring element (26) on the one hand articulated on the link (11) and on the other hand either directly or via a yoke (29, 30) on the fastening member behind and below the swivelling axis (18) as well as a bearing bush (19) extending at least approximately over the entire shank length of the said swivelling axis, wherein, during the wiper operation, the spring element (26) prestresses the link (11) against the window pane to be cleaned and the line of application (38) of the spring element (26) then extends with a particular spacing on this side of the spring dead center line (T) relative to the swivelling axis (18) between fastening member (10) and link (11), whereas the said the line of application (38) extends in a tilted position (A) of the link (11) beyond tile spring dead center line (T), characterised in that the bearing bush (19) has a recess (40) dimensionally adapted to the spring element or the yoke (29), which recess in the tilted position (A) makes possible a dipping of the spring element or of the yoke (29) into the recess (40) of the bearing bush (19) as far as to the generated surface (41) of the swivelling axis (18).

2. A wiper arm according to claim 1, characterised in that the recess (40) extends over an angular range of about 90 degrees.

3. A wiper arm according to claim 1 or 2, characterised in that the recess (40) extends in the axial direction of the swivelling axis (18) slightly farther than the spring element or the yoke (29, 30).

4. A wiper arm according to any one of the preceding claims, characterised in thatin the axial direction the recess (40) is provided substantially in the centre of the swivelling axis (18).

5. A wiper arm according to any one of claims 2 to 5, characterised in that the bearing bush (19) is made by rolling from a substantially rectangular sheet metal piece (49), which has at least on one edge (50, 51) a cutting (52, 53) extending from there into the sheet metal interior, which cutting, after the rolling action, respresents the recess (40) or part of it.

6. A wiper arm according to claim 5, characterised in that the sheet metal piece (49) has at least two cuttings (52, 53) of substantially the same size in the area of two edges (50, 51) located opposite each other.

7. A wiper arm according to any one of claims 1 to 6, characterised in that the bearing bush (19) has at least one means (45, 48) for orienting and securing its position.

8. A wiper arm according to claim 7, characterised in that in two opposite corner areas of the edges (50, 51) a triangular area (54, 55) each has been taken away.

9. A wiper arm according to any one of the preceding claims, characterised in that the fastening member (10) has at least in the area of the swivelling axis (18) two side walls (14) extending with a lateral spacing in the longitudinal direction of the fastening member, which side walls have two bores (20) flush with each other for guiding the swivelling axis (18) and, at least approximately from above of the rear suspension point (34) of the spring element (26) as far as to over a particular angular range of the swivelling axis (18) or of the bearing bush (19), looked on from the rear wiper arm end (13), are connected with each other by a cover wall (15) having a cutting (43) flush with the recess (40), which cutting ends with a spacing from the spring element or yoke (29, 30).

10. A wiper arm according to claim 4, characterised in that it has two spring elements (26) preferably arranged beside each other with a small lateral spacing, which spring elements are hung in the U-curvature (31, 32) of a substantially U-shaped yoke (29), the two U-shanks (30) of which extend closely beside each other over the major part of their lengthes and the free ends (33) of which are articulated on the fastening member (10).

11. A wiper arm according to claim 10, characterised in that the free ends (33) encompass a pin (34) extending between the side walls (14) of the fastening member (10).

12. A wiper arm according to any one of the preceding claims, characterised in that the line of application (38) of the spring element (26) in the tilted position (A) encloses an angle (39) of about 60 degrees opening towards the front wiper arm end (12) with the line of application (35) of the spring element (26) in the operating position (B).

**Revendications**

1. Bras d'essuie-glace, notamment pour des systèmes essuie-glaces de véhicules automobiles, avec une partie de fixation (10) et une partie articulée (11) montée à pivotement sur la partie de fixation (10), dans la région d'une première extrémité avant, autour d'un axe de pivotement (1B) s'étendant au moins approximativement perpendiculairement au sens longitudinal du bras d'essuie-glace, avec au moins un élément de ressort (26) articulé d'une part à la partie articulée (11) et d'autre part à la partie de fixation (10), directement ou par l'intermédiaire d'un étrier (29, 30), en arrière et en dessous de l'axe de pivotement (18), et avec un coussinet (19) entourant l'axe de pivotement (18) et s'étendant au moins approximativement sur toute la longueur axiale de ce dernier, l'élément de ressort (26) mettant la partie articulée (11) en précontrainte contre le pare-brise pendant le fonctionnenent de l'essuie-glace, et la ligne d'action (38) de l'élément de ressort (26) s'étendant alors à une certaine distance en deçà de la ligne de point art (T) du rèssort par rapport à l'axe de pivoteent (18) entre la partie de fixation (10) et la partie articulée (11), tandis que, dans une position rabattue (A) de la partie articulée (11), cette ligne d'action (38) s'étend au-delà de la ligne de point mort (T) du ressort, caractérisé en ce que le coussinet (19) présente un évidement (40) de taille adaptée à l'élément de ressort ou encore à l'étrier (29), qui permet₁ dans la position rabattus (A), un enfoncement de l'élément de ressort ou encore de l'étrier (29) dans l'évidement (40) du coussinet (19) jusqu'à la surface d'enveloppe (41) de l'axe de pivotement (18).

2.   Bras d'essuie-glace selon la revendication 1, caractérisé en ce que l'évidement (40) s'étend sur une plage anguiaire d'environ 90 degrés.

3.   Bras d'essuie-glace selon la revendication 1 ou 2, caractérisé en oe que l'évidement (40) s'étend, dans le sens axial de l'axe de pivotement (18), légèrement plus loin que l'élément de ressort ou encore l'étrier (29, 30).

4.   Bras d'essuie-glace selon l'une des revendications précédentes, caractérisé en ce que l'evidement (40) est prévu, dans le sens axial, au moins approximativement au milieu de l'axe de pivotement (18).

5.   Bras d'essuie-glace selon au moins une des revendications 1 à 4, caractérisé en ce que le coussinet (19) est fabriqué par roulage d'une pièce de tôle (49) sensiblement rectangulaire, qui présente une découpure (52, 53) qui s'étend à l'intérieur de la pièce de tôle à partir d'au moins un bord (50,51) et qui, à la suite du roulage, constitue l'évidement (40) ou une partie de cet évidement.

6.   Bras d'essuie-glace selon la revendication 5, caractérisé en ce que la pièce de rôle (49) présente, dans la région de deux bords en vis-à-vis (50, 51), deux découpures (52, 53) qui sont au soins approximativement de même taille.

7.   Bras d'essuie-glace selon l'une des revendications 1 à 6, caractérisé en ce que le coussinet (19) présente au moins un moyen (45, 48) pour orienter ou encore bloquer sa position.

8.   Bras d'essuie-glace selon la revendication 7, caractérisé en ce qu'une région triangulaire respective (54, 55) est ôtée dans deux zones de coins opposées des bords (50, 51).

9.   Bras d'essuie-glace selon l'une des revendications précédentes, caractérisé en ce que la partie de fixation (10) présente, au moins dans la région de l'axe de pivotement (18), deux parois latérales (14) qui s'étendnt à distance latérale dans le sens longitudinal de la partie de fixation et qui présentent deux perçages (20) en alignement mutuel pour le guidage de l'axe de pivotement (18), et qui, au moins approximativement depuis au-dessus du point d'accrochage arrière (34) de l'élént de ressort (26) jusque sur une plage angulaire donnée de l'axe de pivotement (18) ou encore du couissinet (19), considérée à partir de l'extrémité arrière (13) du bras d'essuie-glace, sont mutuellement assemblées par une paroi de recouvrement (15) qui présente une entaille (43), alignée avec l'évidement (40), qui se termine à distance de l'élément de ressort ou encore de l'étrier (29, 30).

10.  Bras d'essuie-glace selon la revendication 4, caractérisé en ce qu'il présente deux éléments de ressort (26), disposés de préférence à une faible distance latérale l'un à côté de l'autre, qui sont accrochés au coude (31, 32) en U d'un étrier (29) sensiblement en forme de U, dont les deux branches (30) du U s'étendent serrées l'une à côté de l'autre sur la majeure partie de leur étendue longitudinale, et sont articulées par leurs extrémités libres (33) à la partie de fixation (10).

11.  Bras d'essuie-glace selon la revendication 10, caractérisé en ce que les extrémités libres (33) entourent une broche (34) qui s'étend entre les parois latérales (14) de la partie de fixation (10).

12.  Bras d'essuie-glace-selon l'une des revendications précédentes, caractérisé en ce que la ligne d'action (38) de l'élément de ressort (26) dans la position rabattue (A) forme avec la ligne d'action (35) de l'élément de ressort (26) dans la position de service (B) un angle (39), d'environ 60 degrés, qui s'ouvre vers l'extrémité avant (12) du bras d'essuie-glace.

Fig.1

Fig.2

EP 0 301 131 B1

Fig. 3

Fig. 4

# Fig. 5

# Fig. 6